(19) Europäisches Patentamt
European Patent Office
Office européen des brevets

(11) **EP 2 288 138 A1**

(12) **EUROPEAN PATENT APPLICATION**
published in accordance with Art. 153(4) EPC

(43) Date of publication:
**23.02.2011 Bulletin 2011/08**

(51) Int Cl.:
*H04N 5/225* (2006.01)     *B60R 21/00* (2006.01)
*G01S 17/93* (2006.01)     *G06T 1/00* (2006.01)
*G06T 7/00* (2006.01)

(21) Application number: **09746571.0**

(22) Date of filing: **12.05.2009**

(86) International application number:
**PCT/JP2009/058806**

(87) International publication number:
**WO 2009/139364 (19.11.2009 Gazette 2009/47)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.05.2008 JP 2008127526**

(71) Applicant: **Hitachi, Ltd.**
**Chiyoda-ku**
**Tokyo 100-8280 (JP)**

(72) Inventors:
• **OGATA Takehito**
**Hitachi-shi**
**Ibaraki 319-1292 (JP)**
• **SAKAMOTO Hiroshi**
**Hitachi-shi**
**Ibaraki 319-1292 (JP)**
• **TSUCHIYA Kazutoshi**
**Hitachi-shi**
**Ibaraki 319-1292 (JP)**

(74) Representative: **MERH-IP**
**Matias Erny Reichl Hoffmann**
**Paul-Heyse-Strasse 29**
**80336 München (DE)**

(54) **ON-VEHICLE OBJECT DETECTION DEVICE**

(57) An object of the present invention is to provide an on-vehicle object detection device, which achieves both reduction of the load of image processing and reduction of erroneous detection of non-solid objects. A processing candidate Q is selected based on the distance from an own vehicle 70 to an object P, and a forward-view image 60 of the own vehicle 70. Then, based on the distance to the selected processing candidate Q, and the forward-view image 60, it is determined whether or not the processing candidate Q is a predetermined solid object P1 which is set in advance. This reduces the number of executions of the processing for determining the solid object P1, which has a heavy processing load, and also reduces the processing load of a device 3. Further, the solid object P1 is determined by image-processing a high-resolution image, and thereby erroneous detections are reduced.

FIG. 5

EP 2 288 138 A1

## Description

Technical Field

The present invention relates to an on-vehicle object detection device for detecting an object ahead of an own vehicle, which may possibly collide with the own vehicle.

Background Art

Although the number of fatalities due to traffic accidents is on a declining trend thanks to the introduction of post-crash occupant protection countermeasures (an air bag, a collision safe body) which are called as collision safety, the number of accidents is increasing in proportion to the number of owned vehicles, and therefore the development of preventive safety systems for preventing accidents from occurring is important. A preventive safety system is a system which operates before an accident and, for example, a pre-crash safety system has been put into practical use, which alerts the driver with a warning when a collision with an object ahead of the own vehicle becomes possible, and mitigates the damage of the occupant by automatic braking when the collision becomes unavoidable.

In the above described system, an object detection device for detecting an object ahead of the own vehicle, which may possibly collide with the own vehicle is crucial. For example, Patent Document 1 describes a method that uses a laser radar and a camera, and judges the presence of a low reflectance object which has a low reflectance to a laser beam, such as a pedestrian, by a pattern matching using a camera image.

According to that method, when a low reflectance object such as a pedestrian is present near an object having a high reflectance to a laser beam, such as a vehicle, even if the vehicle and the pedestrian are detected as the same object due to a low threshold value for light income, it is possible to identify the position of the pedestrian near the vehicle by image processing.
Patent Document 1: JP Patent Publication (Kokai) No. 2007-240314 A (2007).

Disclosure of the Invention

Problems to be Solved by the Invention

However, if the threshold value of light income is reduced to detect the above described low reflectance object, the radar will become to react to various objects and the subjects of image processing increase thereby increasing the processing load of the device.

Moreover, since as a result of reducing the threshold value, the radar detects objects which have no possibility of colliding with the own vehicle (hereafter, referred to as a non-solid object) such as road paints, manholes, and cat's eyes, when an erroneous detection for such a non-solid object occurs in the image processing, a warning and automatic braking will be actuated in the above described pre-crash safety system thereby leading to a deterioration of safety.

In the pre-crash safety system, since the warning or braking will be actuated when a time-to-collision between the own vehicle and an object ahead is small, there is more need for an object which is closer to the own vehicle and therefore has a smaller time-to-collision, to reduce erroneous detection of non-solid objects by image processing.

Since an object located closer to the own vehicle appears larger on a camera image, processing a high resolution image having more information enables the reduction of erroneous detection, but will result in an increase in computational load. However, there is limitation on the hardware for an on-vehicle system, means which requires large computational load cannot be used.

The present invention has been made in view of the above described problems, and has its object to provide an on-vehicle object detection device which achieves both reduction of the load of image processing and reduction of erroneous detection of non-solid objects.

Means for Solving the Problems

An on-vehicle object detection device of the present invention, which is the means for solving the above described problems, selects a processing candidate based on the distance from the own vehicle to an object and a forward-view image of the own vehicle, and determines if the processing candidate is a predetermined solid object which is set in advance, based on the distance to the processing candidate and the forward-view image.

Advantages of the Invention

According to the present invention, since the determination of a solid object is performed on selected processing candidates, the number of execution of the processing to determine a solid object can be reduced. Therefore, the processing load for the entire device can be reduced. Moreover, in the processing to determine a solid object, an image which has more information can be used to judge a solid object, and erroneous detection for non-solid objects can be reduced.

The present description incorporates the contents described in the description and drawings of JP Patent Application No. 2008-127526 on which the priority of the present application is based.

Brief Description of the Drawings

Figure 1 is a block diagram of an on-vehicle object detection device in a first embodiment of the present invention.

Figure 2 is a flowchart showing the processing content of processing candidate selection means in the first embodiment.

Figure 3 is a flowchart showing the processing content of solid object determination means in the first embodiment.

Figure 4 is a schematic diagram showing the method of determining a pedestrian by a discriminator in the first embodiment.

Figure 5 is a diagram showing an operation example of the on-vehicle object detection device in the first embodiment.

Figure 6 is a block diagram of an on-vehicle object detection device in a second embodiment of the present invention.

Figure 7 is a schematic diagram showing predicted travel path setting means in the second embodiment.

Figure 8 is a schematic diagram showing a setting example of a processing candidate selection region and a solid object determination region in the second embodiment.

Figure 9 is a flowchart showing the processing content of processing candidate selection means in the second embodiment.

Figure 10 is a flowchart showing the processing content of solid object determination means in the second embodiment.

Figure 11 is a flowchart showing the operation method of a pre-crash safety system to which the present invention is applied.

Description of Symbols

100 ... On-vehicle object detection device, 1 ... Measurement unit, 2 ... Image capturing unit, 3 ... Control unit, 31 ... Object information acquisition means, 32 ... Image information acquisition means, 33 ... Processing candidate selection means, 34 ... Solid object determination means, 101 ... On-vehicle object detection device, 4 ... Control unit, 41 ... Own vehicle predicted travel path setting means, 42 ... Processing candidate selection region setting means, 43 ... Solid object determination region setting means, 44 ... Processing candidate selection means, 45 ... Solid object determination means

Best Mode for Carrying Out the Invention

[First embodiment]

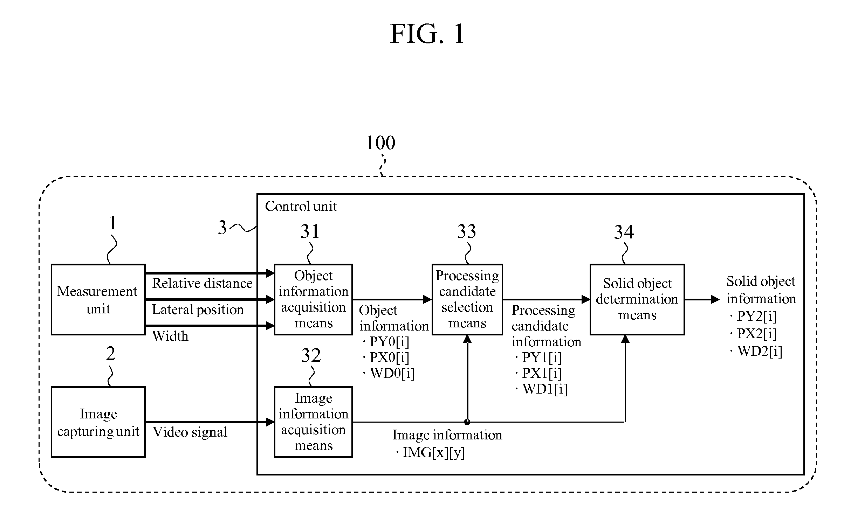

Hereafter, a first embodiment of the present invention will be described in detail using Figures 1 to 4. Figure 1 is a block diagram of an on-vehicle object detection device 100 in the first embodiment. The on-vehicle object detection device 100, which is to be equipped on an automobile, is made up of a measurement unit 1, an image capturing unit 2, and a control unit 3.

The measurement unit 1 is an apparatus that detects an object existent ahead of an own vehicle by using a laser radar, a millimeter-wave radar and the like, and measures a relative distance between the own vehicle and the object (for example, the distance in Y axis along the fore-and-aft direction of the vehicle body), a lateral position of the object (for example, the distance in X axis along the vehicle width direction), and the width of the object. The measurement result of the measurement unit 1 is inputted into the control unit 3 as object information. The measurement unit 1 may either directly input the signal of object information, or transfer it by communication by use of LAN (Local Area Network), to the control unit 3.

The image capturing unit 2, which is attached to a position where the image of the forward view from the own vehicle can be picked up, is an apparatus that converts the forward-view image, which photographed the forward view from the own vehicle by using an image pickup element such as CCD and CMOS, etc., into a signal of digital values. The signal of digital values may be either directly written on a RAM in the control unit 3 as digital values, or converted into an analog signal to be inputted into the control unit 3. Note that it is supposed that the forward-view image taken herein contains an object detected by the measurement unit 1.

The control unit 3 is programmed with a predetermined processing and repeatedly executes the processing on a predetermined cycle. The control unit 3 includes object information acquisition means 31, image information acquisition means 32, processing candidate selection means 33, and solid object determination means 34 as internal functions.

The object information acquisition means 31 acquires object information (relative distance PY0[i], lateral position PX0[i], and width WD0[i]) of an object ahead of the own vehicle according to a detected signal of the measurement unit 1. Where, "i" is the ID number of each object when a plurality of objects are being detected.

The image information acquisition means 32 acquires image information IMG[x][y] of a forward-view image that captures the forward-view from the own vehicle based on the signal of the image capturing unit 2. The image information IMG[x][y] is a two-dimensional array, in which X and y represent coordinates of the image, respectively.

The processing candidate selection means 33 selects a processing candidate based on the object information (relative distance PY0[i], lateral position PX0[i], and width WD0[i]) acquired at the object information acquisition means 31 and the image information IMG[x][y] acquired at the image information acquisition means 32, and calculates processing candidate information (relative distance PY1[i], lateral position PX1[i], and width WD1[i]) of the selected processing candidate. Here, "i" is the ID number of each processing candidate when a plurality of processing candidates are being selected. Note that the method of selecting a processing candidate and the method of calculating processing candidate information will be described later.

The solid object determination means 34 determines whether or not the processing candidate is a predetermined solid object such as a human, etc. based on the processing candidate information (relative distance PY1[i], lateral position PX1[i], and width WD1[i]) of the processing candidate selected at the processing candidate selection means 33 and the image information IMG[x][y] acquired at the image information acquisition means 32, and calculates the solid object information (relative distance PY2[i], lateral position PX2[i], and width WD2[i]) of the solid object that has been determined to be a predetermined solid object. Where, "i" is the ID number of each solid object when a plurality of solid objects are being detected. Note that the method of determining a solid object and the method of calculating solid object information will be described later.

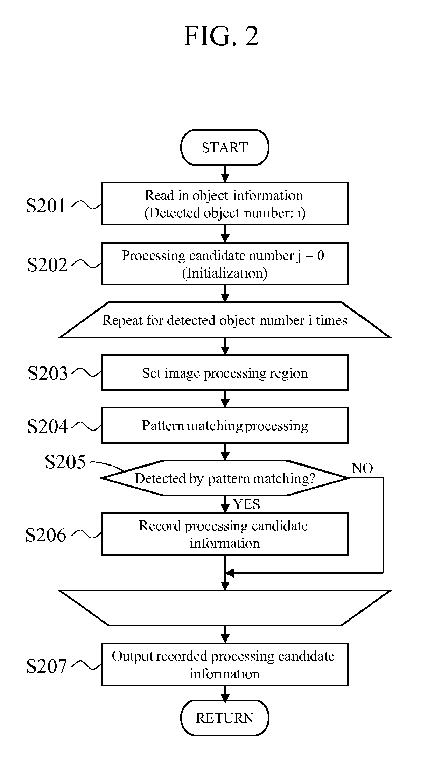

Next, using Figure 2, processing by the processing candidate selection means 33 of the control unit 3 will be described. Figure 2 is a flowchart illustrating the processing content of the processing candidate selection means 33.

First, at step S201, the object information (PY0[i], PX0[i], and WD0[i]) acquired by the object information acquisition means 31 is read in. Then, at step S202, "0" is substituted into a processing candidate number j for initialization. Thereafter, steps S203 to S206 to be described below will be repeated according to the number of objects acquired by the object information acquisition means 31.

At step S203, an image processing region on an image is set based on the object information and a camera geometry model (relationship between a position on an image and an actual position). After the image processing region is set, the process proceeds to step S204, and image processing such as pattern matching that scans within the image processing region is executed to detect an object on the image. Hereafter, the image processing algorithm to be used at step S204 is referred to as a first algorithm. Note that the content of the first algorithm will be described later.

Thereafter, at step S205, a determination is made on whether or not an object is detected in the image processing region. Here, when an object has been detected in the image processing region, the process proceeds to step S206, and the concerned object is selected as a processing candidate and the relative distance PY1[j], lateral position PX1[j]], and width WD1[j] of the object are recorded as processing candidate information, thereafter adding 1 to the processing candidate number j.

Then, after the repetitive processing from step S203 to step S206 is finished, at step S207, the processing candidate information (all the recorded relative distances PY1[j], lateral positions PX1[j], widths WD1[j]) of the recorded processing candidate is outputted to the solid object determination means 34 thereby finishing the process.

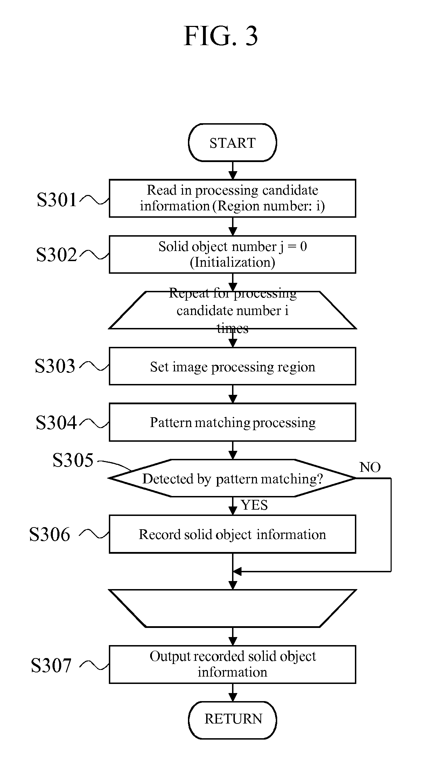

Next, using Figure 3, the solid object determination means 34 of the control unit 3 will be described. Figure 3 is a flowchart illustrating the processing content of the solid object determination means 34.

First, at step S301, the processing candidate information (PY1[i], PX1[i], and WD1[i]) of the processing candidate selected by the processing candidate selection means 33 is read in. Then, at step S302, "0" is substituted into a solid object number j for initialization. Thereafter, steps S303 to S306 to be described below will be repeated according to the number of processing candidates that have been read in.

At step S303, an image processing region on an image is set based on processing candidate information and a camera geometry model. After the image processing region is set, the process proceeds to step S304, and image processing such as pattern matching that scans within the image processing region is executed to detect solid objects on the image. Hereafter, the image processing algorithm to be used at step S304 is referred to as a second algorithm. Note that the content of the second algorithm will be described later.

Thereafter, at step S305, a determination is made on whether or not a solid object of the detection target is detected. Here, when the concerned solid object has been detected, the process proceeds to step S306, and based on the judgment that the object is a solid object which has a possibility of colliding with the own vehicle, the relative distance PY2[j], lateral position PX2[j], width WD2[j] thereof are recorded and "1" is added to the solid object number j.

Then, after the repetitive processing from step S303 to step S306 is finished, at step S307, the solid object information (all the recorded relative distances PY2[j], lateral positions PX2[j], and widths WD2[j]) of the recorded solid object is outputted from the control unit 3 to the outside, thereby finishing the process.

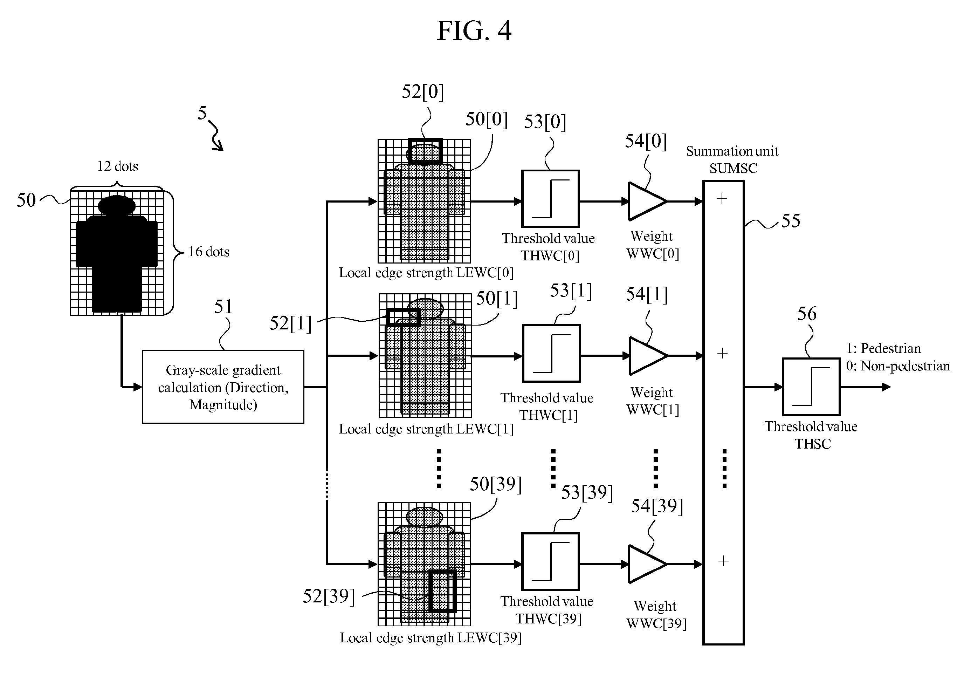

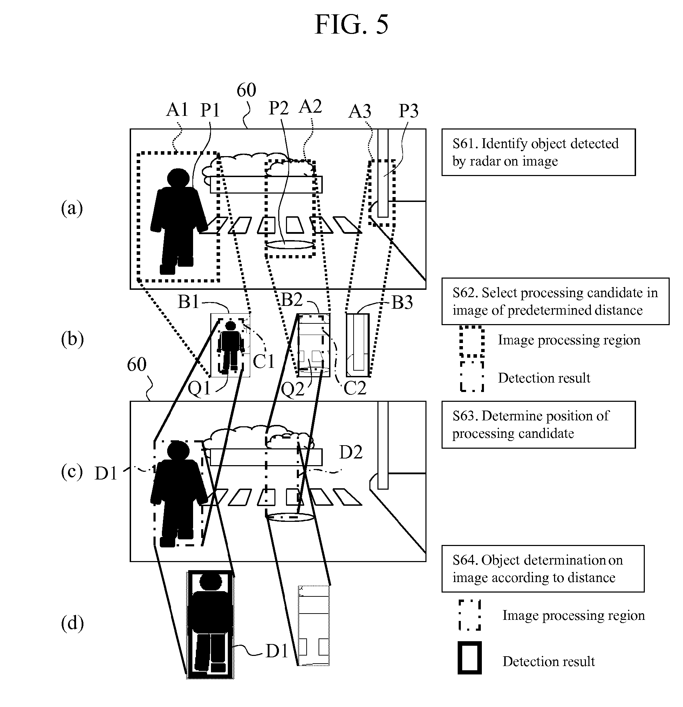

Next, using Figures 4 and 5, taking an example of a case of detecting a pedestrian as a solid object which has a possibility of colliding with the own vehicle, contents of a first algorithm and second algorithm will be described hereafter in detail.

First, the method of detecting a pedestrian by image processing will be described. Examples of the method of detecting a pedestrian include a method by template matching in which a plurality of templates that are representative of pedestrian patterns are prepared and the degree of matching is determined by performing a differential accumulation operation or a normalized correlation operation, or a method of performing pattern recognition by using a discriminator such as a neural network.

Using either method will require a database of sources that provide an indicator for determining whether or not a pedestrian is present in advance. Patterns of various pedestrians are accumulated as a database, and out of them, representative templates are created and a discriminator is produced. In a real environment, since there are pedestrians of various clothing, postures and figures, and furthermore the conditions of illumination and weather will vary, it is necessary to prepare a large amount of database and thereby reduce erroneous determinations.

At this time, in the former case of the method by template matching, a configuration to prevent omissions of determination will result in a huge amount of templates and therefore is not realistic. Then, the present embodiment will adopt the latter method of determination by using a discriminator. The size of the discriminator will not depend on the size of the database of sources. Note that, a database for creating a discriminator is referred to as teacher data.

The method of determining whether or not a pedestrian is present by using a discriminator will be described using Figure 4. Here, description will be made on a case in which the size of an input image 50 is 16 dots long and 12 dots wide.

The discriminator 5 used in the present embodiment determines whether or not a pedestrian is present based on the direction and magnitude of gray-scale gradient in a plurality of subregions 52[n] placed in a predetermined portion in an image. Each subregion 52[n] sums up and outputs the magnitudes of gray-scale gradient in a particular direction at a predetermined position within the image 50. Hereafter, this output is referred to as a local edge strength.

First, upon input of an input image 50, a filtering processing is performed by a filtering processing unit 51 such as a Sobel filter and the like, and images 50[n] having a magnitude and a direction of gray-scale gradient are outputted, respectively. Then, in a subregion 52[n] placed in a predetermined portion of each image 50[n], a local edge strength is calculated by using calculated magnitudes and directions of gray-scale gradient.

To be more specific, the direction of the gray-scale gradient corresponding to each one pixel in the subregion 52[n] is referred, and the magnitudes of gray-scale gradient at corresponding positions of pixels of which direction is the same as the direction predetermined for each subregion 52[n] are summed up. In the case of the present embodiment, since 40 subregions 52[n] are placed, 40 values of local edge strength LEWC[0] to LEWC[39] are obtained.

Next, in each subregion determination processing unit 53[n], each local edge strength is subjected to thresholding with a corresponding threshold value THWC[0] to THWC[39] to be converted into a binary number of "1" or "0", is multiplied by a weight WWC[0] to WWC[39] at a corresponding weighting unit 54[n] to be outputted to a summation unit SUMSC55. The 40 values inputted from each weighting unit 54[n] are summed up by the summation unit SUMSC55, and are subjected to thresholding with a final threshold value THSC at the final determination processing unit 56 to be outputted as "1" or "0".

The number, position, size, and direction of gray-scale gradient of the subregion 52[n] which are parameters for calculating each local edge strength LEWC[0] to LEWC[39] in the discriminator 5; the threshold values THWC[0] to THWC[39] of local edge strength in the subregion determination processing unit 53[n]; the weights WWC[0] to WWC[39] of the weighting unit 54[n]; the final threshold value THSC of the final determination processing unit 56; and the like are adjusted, by using teacher data, to output "1" when the input image 50 to the discriminator 5 is a pedestrian, and "0" when it is not a pedestrian. The adjustment may be performed by using machine learning means such as AdaBoost or performed manually.

For example, letting the number of the teacher data for pedestrian be NPD, the number of the teacher data for non-pedestrian be NBG, the adjustment method of the above described parameters by use of AdaBoost is as follows.

Hereafter, a local edge, which is calculated from the position, size, and direction of gray-scale gradient of a certain subregion 52, is represented as cLEWC[m]. Where, m is the ID number of each local edge.

First, a plurality of (for example, one million kinds of) local edge strengths each having a different position, size, and direction of gray-scale gradient of a subregion 52 are prepared, and the value cLEWC[m] of each local edge strength is calculated from all the teacher data to determine each threshold value cTHWC[m]. The threshold value cTHWC[m] is selected to be the value which can best separate the teacher data for pedestrian from the teacher data for non-pedestrian.

Next, a weight of wPD[nPD] = 1/2NPD is given to each of the teacher data for pedestrian, and a weight of wBG[nBG] = 1/2NBG to each of the teacher data for non-pedestrian. Here, nPD is the ID number of each teacher data for pedestrian, and nBG is the ID number of each teacher data for non-pedestrian.

Then, letting k = 1, hereafter, a repetitive processing is performed. First, the weights are normalized such that the total of the weights of all the teacher data for pedestrian and non-pedestrian is 1. Next, an erroneous detection rate cERWC[m] of each local edge is calculated.

The erroneous detection rate cERWC[m] is the total of the weights of the teacher data for pedestrian in which the result of thresholding the local edge strength cLEWC[m] thereof with a threshold value cTHWC[m] gives non-pedestrian, or the teacher data for non-pedestrian in which the result of thresholding the local edge strength cLEWC[m] thereof with a threshold value cTHWC[m] gives pedestrian, that is, the teacher data in which the result of the thresholding is different from actuality.

After the erroneous detection rates cERWC[m] of all the local edges are calculated, the ID of the local edge mMin for which erroneous detection rate becomes minimum is selected to let LEWC[k] = cLEWC[mMin] and threshold value THWC[k] = cTHWC[mMin].

Next, the weight of each teacher data is updated. The updating is performed by multiplying the weights of the teacher data for pedestrian in which the result of thresholding the local edge strength LEWC[k] thereof with a threshold value THWC[k] gives pedestrian, or the teacher data for non-pedestrian in which the result of thresholding the local edge strength LEWC[k] thereof with a threshold value THWC[k] gives non-pedestrian, that is, the teacher data in which the result of the thresholding is correct answer, by a factor BT[k] = cERWC[mMin]/(1-cERWC[mMin]).

Letting k = k+1, the process is repeated until k becomes a predetermined value (for example, 40). The local edge LEWC[k] and threshold value THWC[k], which are obtained after the repetitive processing is finished, serve as a discriminator 5 that is automatically adjusted by AdaBoost. Note that the weight WWC[k] = 1/BT[k] and the final threshold value THSC = 0.5.

Next, description will be made on the method of detecting a pedestrian from an image within a given image processing region by using the above described discriminator 5. First, the image size is converted such that the size of a pedestrian that appears on an image within a given image processing region becomes 16 dots long and 12 dots wide. When the size of the image after conversion becomes larger than 16 dots by 12 dots, such as in a case in which an object other than the pedestrian appears on the image at the same time, a search is performed by the following means.

First, a 16×12 window is set in the upper left of the image after conversion and the image in this window is subjected to the above described discriminator 5. Then, the window is successively subjected to the discriminator 5 while being shifted rightward by 1 dot by 1 dot, and when the window reaches the right end, the window is moved down by 1 dot to be returned to the left end and is again successively subjected to the discriminator 5 while being moved rightward again. This search is repeated until the window reaches the lower right. In this search, a pedestrian will be present in a place where the output of the discriminator 5 is "1".

Next, description will be made on the contents of a first algorithm to be used in the image processing at step S203, and a second algorithm to be used in the image processing at step S303.

In the present embodiment, four discriminators 5, each having a different size of input image 50, are prepared, with the first algorithm utilizing the first discriminator 5 having the smallest size of the input image 50, and the second algorithm utilizing the remaining three kinds, that is, the second to the fourth discriminators 5. The second to the fourth discriminators 5 are configured to have a larger size of the input image 50 than that of the first discriminator 5, and to have gradually larger sizes in the order of the second to the fourth discriminators 5.

The first algorithm converts the image size of an image in the image processing region, assuming that a pedestrian is present in the image of the image processing region set by the processing candidate selection means 33 at step S203 and using a relative distance to an object and a camera geometry model, such that the size of the image is the same as that of an image in which a pedestrian is present at a position a preset distance forwardly away from the own vehicle.

To be specific, the first discriminator 5 is prepared which can detect a pedestrian present at a position 40 meters forwardly away from the own vehicle, and an image in the image processing region set at step S203 is converted by using a camera geometry model so as to have the same size as that of an image in which a pedestrian is present at a position 40 meters forwardly away from the own vehicle, so that a pedestrian is detected by the above described search method.

Note that the present embodiment is predicated on that a pedestrian is present between the own vehicle and a point 40 meters forwardly away from the own vehicle. Therefore, at step S203, the image in the image processing region will be converted in a contracting direction.

Then, when a pedestrian is detected, the detection position of the pedestrian on the image after conversion is converted into a position on the image before conversion, and processing candidate information (relative distance PY1[i], lateral position PX1[i], and width WD1[i]) is updated by using a camera geometry model.

The second algorithm assumes that a pedestrian is present in an image of the image processing region set at step S303, and converts the image size of the image in the image processing region such that the image size corresponds to the discriminator 5 which is most suitable for searching the pedestrian in the image, by using the relative distance to an object and a camera geometry model.

To be specific, a second to a fourth discriminators 5 that can detect pedestrians located at positions 10 m, 20 m, and 30 m forwardly away from the own vehicle are prepared, respectively. Then, when a processing candidate is present at a position more than 20 m away from the own vehicle, the image of the image processing region set at step S303 is converted into an image size of the image at 30 m point, and the fourth discriminator 5 is used to search a pedestrian by the above described search method.

Then, when the processing candidate is present at a distance of 20 to 10 m from the own vehicle, the image of the image processing region is converted into an image size of the image of 20 m point, and the third discriminator 5 is used to search a pedestrian by the above described search method.

Moreover, when the processing candidate is present at a position less than 10 m away from the own vehicle, the image of the image processing region is converted into an image size of the image of 10 m point, and the second discriminator 5 is used to search a pedestrian by the above described search method.

Here, when a pedestrian is detected from the processing candidate, the detection position of the pedestrian on the image after conversion is converted into a position on the image before conversion, and the solid object information (relative distance PY2[i], lateral position PX2[i], and width WD2[i]) is updated by using a camera geometry model.

A concrete operation example of the processing described so far will be described using Figure 5.

First, an object P that is detected by the measurement means 1 is identified on a forward-view image 60, and the image portion including the object P is set as an image processing region A (S61). The position of the object P on the forward-view image 60 is identified based on the object information of the object P detected by the measurement unit 1 and a camera geometry model.

In the present embodiment, as shown in Figure 5(a), three objects, object P1 (pedestrian), object P2 (manhole), and object 3 (utility pole) are identified on the forward-view image 60, and those image portions are set as image processing regions A1 to A3. The image processing regions A1 to A3 are set so as to surround the objects P1 to P3 with a predetermined spacing.

Next, the first algorithm is used to perform image processing on the image in the image processing region A, and an image processing candidate is selected according to the result of the image processing (S62). In the first algorithm, the image in each image processing region A is converted to be reduced to the same size as that of the image of a human that is present at a position 40 m forwardly away from the own vehicle, and a search is performed on the reduced image to select a processing candidate.

In this way, since the processing candidate (pedestrian) is searched in the image B that is reduced from the image of the image processing region A, the search region can be further reduced than in the case in which the processing candidate is searched in the image processing region A. Therefore, the processing load of the control unit 3 can be reduced and also a rapid search is possible.

When a processing candidate Q is detected in the image B, the position of the processing candidate Q in the image B is converted into a position on the original forward-view image 60 and the processing candidate information (PY1[i], PX1[i], and WD1[i]) of the processing candidate Q is updated from the object information of the corresponding object P.

In the present embodiment, as shown in Figure 5(b), processing candidates Q1 and Q2 are selected in regions C1 and C2 in the images B1 and B2, out of the images B1 to B3 which are reduced from the images of the image processing regions A1 to A3. And the positions of the processing candidates Q1 and Q2 are converted into the positions on the original forward-view image 60 (see Figure 5(c)) and the processing candidate information is updated.

Then, based on the processing candidate information (PY1[i], PX1[i], and WD1[i]) of the processing candidate Q and the forward-view image 60, an image processing region D is set in the forward-view image 60 (S63), and an image processing using the second algorithm is performed on the image of the image processing region D to determine whether or not the processing candidate Q is a predetermined solid object (pedestrian) (S64).

In the second algorithm, since the second to the fourth discriminators 5 for 10 m, 20 m, and 30 m are selectively used depending on the relative distance to a processing object, the size of the image to be processed will vary depending on the relative distance to the processing candidate. In the present embodiment, the object P1 in the image processing region D1 out of the image processing regions D1 and D2 has been determined to be a pedestrian.

As described so far, according to the on-vehicle object detection device 100, the range in which the second algorithm is executed can be narrowed by the first algorithm, thereby enabling the reduction of the processing load of the control unit 3. That is, since processing candidates are selected first and a determination of whether or not the processing candidates are solid objects is made on the selected processing candidates, it is possible to reduce the number of executions of the image processing of the second algorithm, the processing load of which is larger than that of the image processing of the first algorithm, consequently reducing the processing load of the control unit 3.

Moreover, in the processing candidate selection means 33, since the image in an image processing region of a forward-view image is reduced by the first algorithm and processing candidates are searched in the reduced image, the search range can be made smaller than in the search of the image in an image processing region of a forward-view image, enabling a reduction of the processing load of the control unit 3 and also a rapid search.

Moreover, in the solid object determination means 34, since a solid object is determined by the second algorithm using an image of higher resolution than that of the image to be used when the processing candidate selection means 33 selects processing candidates, it is possible to reduce erroneous detections.

Moreover, in the solid object determination means 34, the second to the fourth discriminators 5 are selectively used by the second algorithm according to the relative distance between the own vehicle and the processing candidate, it is possible to reduce more erroneous detections for closer objects. That is, since in an image of a forward view of own vehicle taken by a camera, an object closer to the own vehicle appears larger in the image, thus providing more information, more information can be used for objects closer to the own vehicle by selectively using the discriminators 5 according to the distance, and as a result, erroneous detections can be reduced.

Note that the number of the discriminators 5 used in the first algorithm and the second algorithm are not limited to one and three, respectively, and any number of them may be used. Moreover, the size of the input image 50 of each discriminator 5 is not limited to the sizes at distances of 10 m, 20 m, 30 m, and 40 m, and may be set to images at any distance. Moreover, the discriminator 5 to be used for the detection of a pedestrian will not be limited to the method adopted in the present embodiment. Neural network discriminators, the Support Vector Machine discriminator, the Bayes discriminator, and the like may be used.

[Second embodiment]

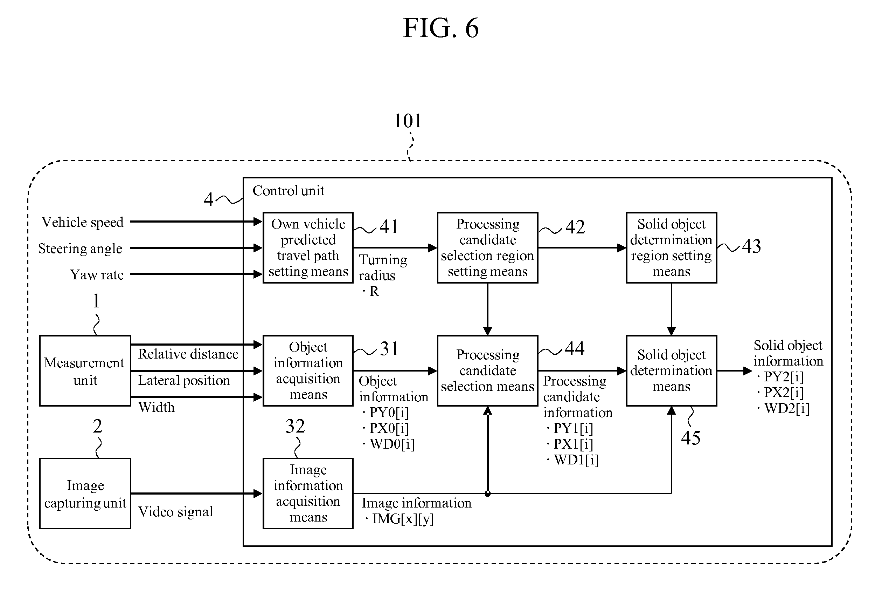

Next, another embodiment of the on-vehicle object detection device 101 of the present invention will be described in detail using Figures 6 to 10. Note that in the following description, only different parts from the above described on-vehicle object detection device 100 will be described in detail, and like parts will be given the like numbers thereby omitting description thereof.

Figure 6 is a block diagram showing an embodiment of an on-vehicle object detection device 101 of another form. The on-vehicle object detection device 101 is made up of a measurement unit 1, an image capturing unit 2, and a control unit 4.

The control unit 4 is programmed with a predetermined processing, and executes repetitive processing on a predetermined cycle. The processing different from that of the control unit 3 will be described below.

Predicted travel path setting means 41 acquires own vehicle information such as a vehicle speed Vsp, a steering angle $\alpha$, a yaw rate $\gamma$, and the like according to detection signals of a vehicle speed sensor, a steering angle sensor, a yaw rate sensor, and like, and calculates a predicted travel path of own vehicle according to the own vehicle information.

Acquisition of such own vehicle information may be performed by directly inputting signals of each sensor into the control unit 4, or when the sensor signals have been inputted to another control unit, by performing communication with the control unit using a LAN (Local Area Network). Here, a turning radius R is calculated as the predicted travel path of the own vehicle. Note that the method of calculating the turning radius R will be described later.

Processing candidate selection region setting means 42 sets a processing candidate selection region for processing candidate selection means 44 executing selection processing according to the predicted travel path of the own vehicle acquired at the predicted travel path setting means 41. Note that the method of setting a processing candidate selection region will be described later.

Solid object determination region setting means 43 sets a solid object determination region for solid object determination means 45 executing determination processing according to the processing candidate selection region acquired at the processing candidate selection region setting means 42. Note that the method of setting a solid object determination region will be described later.

The processing candidate selection means 44 calculates processing candidate information (relative distance PY1[i], lateral position PX1[i], and width WD1[i]) according to the object information (relative distance PY0[i], lateral position PX0[i], and width WD0[i]) acquired at object information acquisition means 31, image information IMG[x][y] acquired at image information acquisition means 32, and a processing candidate selection region set at the processing candidate selection region setting means 42. Here, "i" indicates the ID number of each processing candidate when a plurality of processing candidates are being selected. Note that the method of calculating a processing candidate will be described later.

The solid object determination means 45 calculates solid object information (relative distance PY2[i], lateral position PX2[i], and width WD2[i]) according to the image information IMG[x][y] of the image acquired at the image information acquisition means 32, the processing candidate information (relative distance PY1[i], lateral position PX1[i], and width WD1[i]) calculated at the processing candidate selection means 44, and the solid object determination region set at the solid object determination region setting means 43. Here, "i" indicates the ID number of each solid object when a plurality of solid objects are being detected. Note that the method of calculating object determination will be described later.

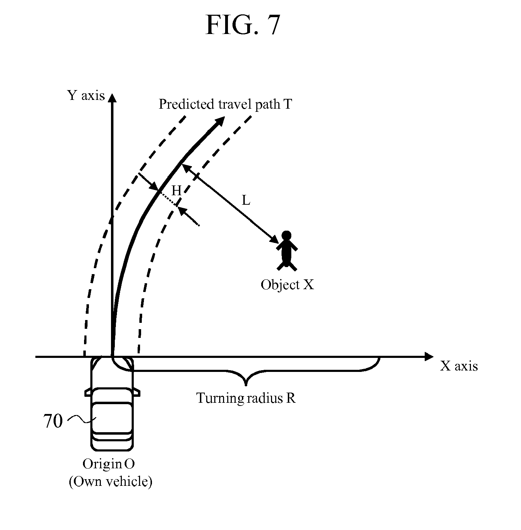

Next, using Figure 7, the predicted travel path setting means 41 of the on-vehicle object detection device 101 will be described. Figure 7 is a schematic diagram showing processing contents of the predicted travel path setting means 41.

As shown in Figure 7, supposing that the position of an own vehicle 70 be an origin "O", a predicted travel path T can be approximated by a circular arc of a turning radius R passing through the origin O. Here, the turning radius R can be represented by Expression (1) using a steering angle $\alpha$, a speed Vsp, a stability factor A, a wheel base B, and a steering gear ratio Gs of the own vehicle 70.

$$R = (1 + AVsp^2) \times (B \cdot Gs/\alpha) \qquad (1)$$

The stability factor A, sign conditions of which dominate the steering characteristics of a vehicle, is an important value to provide an indicator indicating the magnitude of the change depending on the speed of steady-state circular turning of the vehicle. As seen from Expression (1), the turning radius R changes in proportion to the square of the speed Vsp of the own vehicle 70 with the stability factor A being a coefficient. Moreover, the turning radius R can be represented by Expression (2) using the vehicle speed Vsp and the yaw rate $\gamma$.

$$R = Vsp/\gamma \qquad (2)$$

As so far described, by utilizing the own vehicle information of vehicle speed Vsp, steering angle $\alpha$, and yaw rate $\gamma$, it becomes possible to approximate the predicted travel path of the own vehicle 70 with a circular arc of a turning radius R.

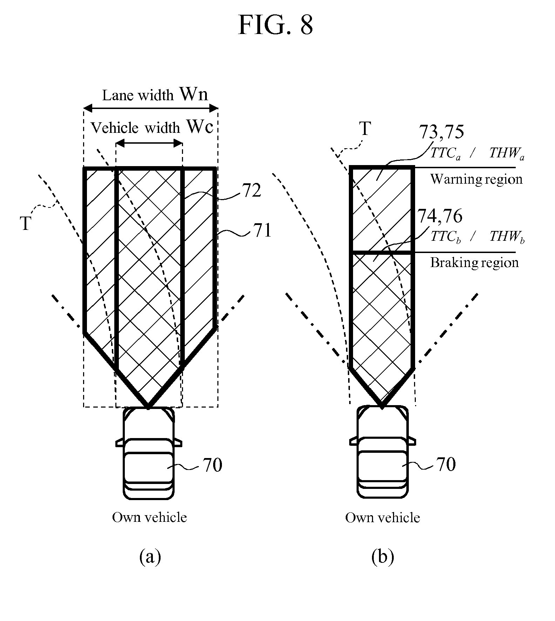

Next, the processing candidate selection region setting means 42 and the solid object determination region setting means 43 of the control unit 4 will be described. According to the predicted travel path T set at the predicted travel path setting means 41, the processing candidate selection region setting means 42 sets a processing candidate selection region 71, for example, such that the region has a width of a lane width Wn on the predicted travel path T as shown in Figure 8(a).

The solid object determination region setting means 43 sets a solid object determination region 72, for example, such that the region is laid on the predicted travel path T having a width of an own vehicle width Wc as shown in Figure 8(a) according to the processing candidate selection region 71 set by the processing candidate selection region setting means 42.

Although in the above example, a setting example of the width has been described as the method of setting the processing candidate selection region 71 and the solid object determination region 72, there is another setting method which sets the region in the distance direction from the own vehicle 70.

Figure 8(b) shows an example in which time spans, TTCa and TTCb, are specified and a configuration is made such that a warning region where a time-to-collision, which is calculated by dividing the relative distance to an object ahead of the own vehicle 70 by a relative speed, is no more than TTCa is set as a processing candidate selection region 73, and a braking region where the time-to-collision is no more than TTCb is set as a solid object determination region 74.

Moreover, time spans, THWa and THWb, may be specified to configure such that by using predicted positions obtained from the own vehicle speed, and THWa and THWb, a region as far as to an arrival position of the own vehicle at an elapse of THWa is set as a candidate selection region 75, and a region as far as to an arrival position of the own vehicle at an elapse of THWb is set as a solid object determination region 76.

Note that the method of setting the processing candidate selection regions 71, 73 and 75 and the solid object determination regions 72, 74 and 76 is not limited to this, and the region may be set to a portion where the recognition result of a lane recognition apparatus, which recognizes the traveling lane of the own vehicle 70 from an image obtained by an image capturing unit 2 such as a camera, and the predicted travel path T are superposed, or may be set according to the distance to an object ahead of the own vehicle 70 which is detected by a measurement unit 1 such as a radar.

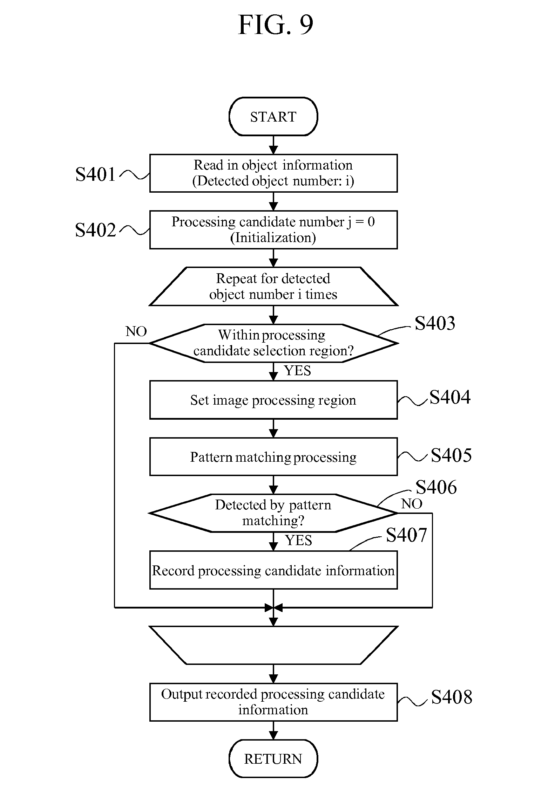

Next, using Figure 9, the processing candidate selection means 44 of the control unit 4 will be described. Figure 9 is a flowchart showing the processing content of the processing candidate selection means 44.

First, at step S401, object information (PY0[i], PX0[i], and WD0[i]) detected by the object information acquisition means 31 is read in. Next, at step S402, "0" is substituted into the processing candidate number j for initialization. Thereafter, according to the number of objects that have been read in, the below described process from step S403 to step S407 will be repeated.

At step S403, a determination is made on whether or not the object is within the processing candidate selection region set by the processing candidate selection region setting means 42. When the object is judged to be outside the processing candidate selection region, the process enters into the next repetitive process. When the object is judged to be inside the processing candidate selection region, the processing after step S404 is successively performed.

At step S404, an image processing region on an image is set based on the object information and a camera geometry model. After the image processing region is set, the process proceeds to step S405, and an object is detected by executing image processing such as pattern matching that scans the inside of the region.

The algorithm of the image processing to be used at step S405 is the same as the first algorithm according to the above described step S204. Thereafter, at step S406, a determination is made on whether or not an object is detected. When an object is detected, the process proceeds to step S407, and the relative distance PY1[j], lateral position PX1[j], and width WD1[j] are recorded as a processing candidate according to the result of pattern matching, and the processing candidate number j is added with 1.

After the repetitive processing is finished, at step S408, the recorded processing candidate information (all the recorded relative distances PY1[j], lateral positions PX1[j], and widths WD1[j]) is outputted to the solid object determination means 45 thereby finishing the process.

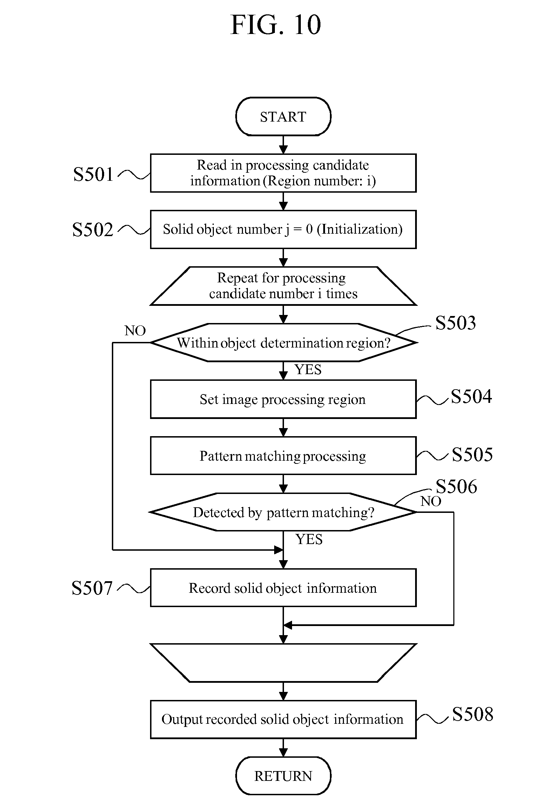

Next, using Figure 10, the solid object determination means 45 of the control unit 4 will be described.

Figure 10 is a flowchart showing the processing contents of the solid object determination means 45.

First, at step S501, the processing candidate information (PY1[i], PX1[i], and WD1[i]) selected by the processing candidate selection means 44 is read in. Next, at step S502, 0 is substituted into the solid object number j for initialization. Thereafter, according to the processing candidate number that has been read in, the below described steps S503 to S507 are repeated.

At step S503, a determination is made on whether or not the processing candidate is present within the solid object determination region set by the solid object determination region setting means 43. When the processing candidate is judged to be outside the solid object determination region ("No" at step S503), the process proceeds to S507, and the acquired processing candidate (relative distance PY1[i], lateral distance PX1[i], and width WD1[i]) is registered as it is as a solid object (relative distance PY2[j], lateral position PX2[j], and width WD2[j]), thereafter entering into the next repetitive processing. On the other hand, when the processing candidate is judged to be present within the solid object determination region ("YES" at step S503), the processing after S504 will be successively performed.

At step S504, an image processing region on an image is set based on the processing candidate information and a camera geometry model. After the image processing region is set, the process proceeds to step S505, and image processing such as pattern matching that scans the inside of this region is executed to detect a solid object. The algorithm of image processing to be used at step S505 is the same as the second algorithm according to the above described step S304.

Thereafter, at step S506, a determination will be made on whether or not a solid object is detected, and when a solid object is detected ("YES" at step S506), the process proceeds to step S507 and the relative distance PY2[j], lateral position PX2[j], and width WD2[j] of the solid object are recorded and the solid object number j is added with 1.

After the repetitive processing is finished, at step S508, the solid object information of the recorded solid object (all the recorded relative distances PY2[j], lateral positions PX2[j], and widths WD2[j]) is outputted from the on-vehicle object detection device 101 to the outside thereby finishing the processing.

As so far described, in the present embodiment, by setting the processing candidate selection region and the solid object determination region, it is possible to limit the image processing target and thereby to more reduce the processing load than in the above described on-vehicle object detection device 100.

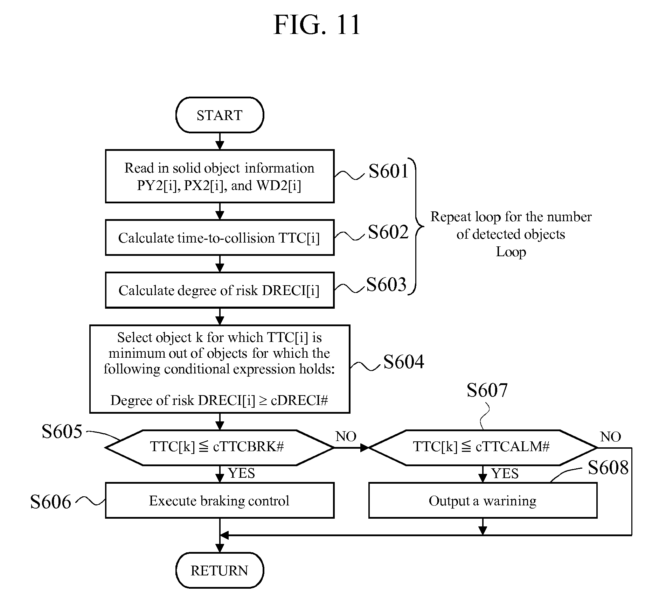

Next, using Figure 11, the operation of the control system will be described taking an example of a pre-crash safety system, in which a warning is issued, or braking is automatically controlled according to the solid object information (relative distance PY2[i], lateral position PX2[i], and width WD2[i]) obtained by each embodiment described above.

Figure 11 is a flowchart showing the operation method of a pre-crash safety system. First, at step S601, the solid object information (relative distance PY2[i], lateral position PX2[i], and width WD2[i]) calculated at the on-vehicle object detection device 100 or the on-vehicle object detection device 101 is read in.

Next, at step S602, a time-to-collision TTC[i] of each detected object is calculated by using Expression (3). Here, a relative speed VY[i] is determined by quasi-differentiating the relative distance PY[i] of the object.

$$TTC[i] = PY[i] \div VY[i] \qquad (3)$$

Then, at step S603, a degree of risk DRECI[i] for each object is calculated. Hereafter, an example of the method of calculating the degree of risk DRECI[i] for the detected object X[i] by the on-vehicle object detection device 100 or the on-vehicle object detection device 101 will be described using Figure 7.

First, a perpendicular line is drawn to the center of a predicted travel path T obtained from an object X[i] by the above described method to determine a separation distance L[i] between an object X and a predicted travel path T. Next, the distance L[i] is subtracted from a width H which is a half of the vehicle width Wc (H = Wc/2), and when the result is a negative value, the degree of risk is let to be DRECI[i] = 0, and when the result is a positive value, the degree of risk DRECI[i] is calculated by the following Expression (4).

$$DRECI[i] = (H-L[i])/H \qquad (4)$$

Note that it is configured that the processing of steps S601 to S604 is performed in a loop process according to the number of detected objects.

At step S604, an object for which following Expression (5) holds is selected according to the degree of risk DRECI[i] calculated at step S603, and an object k of which the time-to-collision TTC[i] is minimum within the selected objects is selected.

$$DRECI[i] \geq cDRECI\# \qquad (5)$$

Where, a predetermined value cDRECI# is a threshold value for determining whether or not the object will collide with the own vehicle 70.

Next, at step S605, a determination is made on whether or not it is within the range in which braking is automatically controlled, according to the time-to-collision TTC[k] of the selected object k using the following Expression (6).

$$TTC[k] \leq cTTCBRK\# \qquad (6)$$

When the above described Expression (6) holds, based on the judgment that the object k is within the braking region, the process proceeds to step S606 and the braking control is executed thereby finishing the processing. Moreover, when Expression (6) does not hold, the process proceeds to step S607.

At step S607, a determination is made on whether or not it is within the range in which a warning is outputted according to the time-to-collision TTC[k] of the selected object k by using the following Expression (7).

$$TTC[k] \leq cTTCALM\# \qquad (7)$$

When the above described Expression (7) holds, based on the judgment that the object k is present within the warning region, the process proceeds to step S608 and a warning is outputted thereby finishing the process. Moreover, when Expression (7) does not hold, the process is finished without executing both the braking control and the warning.

As so far described, the object information (relative distance PY2[i], lateral position PX2[i], and width WD2[i]) obtained from the on-vehicle object detection device 100 or 101 which is the present invention is important parameters to be used for calculating a degree of risk DRECI[i] relating to the system operation such as automatic braking and warning.

By being configured in the embodiments as described above, the present invention can reduce erroneous detection of non-solid objects near the own vehicle and thereby prevent erroneous operations of warning and automatic braking.

Note that the present invention can be subject to, without being limited to each embodiment described above, various modifications are possible within a range not departing from the spirit and scope of the present invention.

**Claims**

1. An on-vehicle object detection device, comprising a measurement unit for measuring the distance between an own vehicle and an object ahead of the own vehicle, an image capturing unit for capturing a forward-view image of the own vehicle, and a control unit for identifying an image of the object from the forward-view image based on the distance to the object and performing processing to discriminate the object by using the image of the object, wherein the control unit comprises:

   processing candidate selection means for selecting a processing candidate based on the distance to the object and the forward-view image; and

solid object determination means for determining if the processing candidate is a predetermined solid object based on the distance to the processing candidate and the forward-view image.

2. The on-vehicle object detection device according to claim 1, wherein
the processing candidate selection means selects a processing candidate from the object by setting an image processing region in the forward-view image based on the distance to the object and the forward-view image, and executing image processing on an image in the image processing region; and
the solid object determination means determines if the processing candidate is a predetermined solid object which is set in advance, by setting an image processing region in the forward-view image based on the distance to the processing candidate and the forward-view image, and executing image processing on an image of the image processing region.

3. The on-vehicle object detection device according to claim 2, wherein
an image in the image processing region for which the image processing is executed by the solid object determination means has a higher resolution than that of an image in the image processing region for which the image processing is executed by the processing candidate selection means.

4. The on-vehicle object detection device according to claim 3, wherein
the processing candidate selection means reduces an image in the image processing region into the same size as that of an image when the solid object is disposed at a position a preset distance forwardly away from the own vehicle, and executes image processing on the reduced image, and
the solid object determination means reduces an image in the image processing region into the same size as that of an image when the solid object is disposed at a position a preset distance forwardly away from the own vehicle, and executes image processing on the reduced image.

5. The on-vehicle object detection device according to claim 4, wherein
a reduction rate by which the solid object determination means reduces an image in the image processing region is set to be smaller than a reduction rate by which the processing candidate selection means reduces an image in the image processing region.

6. The on-vehicle object detection device according to claim 1, wherein
the processing candidate is a candidate of a human, and
the predetermined solid object is a human.

7. The on-vehicle object detection device according to claim 1, wherein
the measurement unit is a radar, and the image capturing unit is a camera.

8. The on-vehicle object detection device according to claim 1, wherein
the control unit comprises predicted travel path setting means for setting a predicted travel path of an own vehicle, and processing candidate selection region setting means for setting a processing candidate selection region according to the predicted travel path; and
the processing candidate selection means determines whether or not the object is present in the processing candidate selection region based on the distance to the object, and upon judging that the object is present in the processing candidate selection region, sets an image processing region in the forward-view image based on the distance to the object and the forward-view image.

9. The on-vehicle object detection device according to claim 8, wherein
the processing candidate selection region setting means sets the processing candidate selection region such that the region has a width of a lane width on the predicted travel path of the own vehicle.

10. The on-vehicle object detection device according to claim 8, wherein
the processing candidate selection region setting means sets the processing candidate selection region according to the speed of the own vehicle and the predicted travel path.

11. The on-vehicle object detection device according to claim 8, wherein
the processing candidate selection region setting means sets the processing candidate selection region according to a time-to-collision, which is calculated based on the relative distance and relative speed between the own vehicle and an object, and the predicted travel path.

12. The on-vehicle object detection device according to claim 8, wherein
the control unit comprises travel lane recognition means for recognizing a traveling lane of the own vehicle by an external environment recognition sensor, and
the processing candidate selection region setting means sets the processing candidate selection region according to a recognition result of the travel lane recognition means, and the predicted travel path.

13. The on-vehicle object detection device according to claim 1, wherein
the control unit comprises solid object determination region setting means for setting a solid object determination region according to the predicted travel path, and
the solid object determination region setting means determines whether or not the processing candidate is present in the processing candidate selection region based on the distance to the processing candidate, and upon judging that the processing candidate is present in the solid object determination region, sets an image processing region in the forward-view image based on the distance to the processing candidate and the forward-view image.

14. The on-vehicle object detection device according to claim 13, wherein
the solid object determination region setting means sets the solid object determination region such that the region has a width of an own-vehicle width on the predicted travel path of the own vehicle.

15. The on-vehicle object detection device according to claim 13, wherein
the solid object determination region setting means sets the solid object determination region according to a speed of the own vehicle and the predicted travel path.

16. The on-vehicle object detection device according to claim 13, wherein
the solid object determination region setting means sets the solid object determination region based on a time-to-collision calculated based on the relative distance and relative speed between the own vehicle and an object, and the predicted travel path.

17. The on-vehicle object detection device according to claim 13, wherein
the control unit comprises travel lane recognition means for recognizing a travel lane of the own vehicle by an external environment recognition sensor, and
the solid object determination region setting means sets the solid object determination region according to a recognition result of the travel lane recognition means and the predicted travel path.

# FIG. 1

Control unit

**1 Measurement unit** → Relative distance, Lateral position, Width →
**31 Object information acquisition means** → Object information · PY0[i] · PX0[i] · WD0[i] →
**33 Processing candidate selection means** → Processing candidate information · PY1[i] · PX1[i] · WD1[i] →
**34 Solid object determination means** → Solid object information · PY2[i] · PX2[i] · WD2[i]

**2 Image capturing unit** → Video signal →
**32 Image information acquisition means** → Image information · IMG[x][y]

100

3

# FIG. 2

```
                    ┌──────────┐
                    │  START   │
                    └──────────┘
                         │
                         ▼
              ┌──────────────────────────┐
S201          │  Read in object information│
              │  (Detected object number: i)│
              └──────────────────────────┘
                         │
                         ▼
              ┌──────────────────────────┐
S202          │ Processing candidate number j = 0│
              │        (Initialization)   │
              └──────────────────────────┘
                         │
                         ▼
          ╱───────────────────────────────╲
          │ Repeat for detected object number i times │
          ╲───────────────────────────────╱
                         │
                         ▼
              ┌──────────────────────────┐
S203          │   Set image processing region │
              └──────────────────────────┘
                         │
                         ▼
              ┌──────────────────────────┐
S204          │   Pattern matching processing │
              └──────────────────────────┘
                         │
                         ▼
S205      ╱───────────────────────────────╲     NO
          │  Detected by pattern matching?  │────┐
          ╲───────────────────────────────╱     │
                         │ YES                    │
                         ▼                        │
              ┌──────────────────────────┐        │
S206          │   Record processing candidate │    │
              │        information         │        │
              └──────────────────────────┘        │
                         │◄──────────────────────┘
                         ▼
          ╲───────────────────────────────╱
          ╱───────────────────────────────╲
                         │
                         ▼
              ┌──────────────────────────┐
S207          │ Output recorded processing candidate│
              │        information         │
              └──────────────────────────┘
                         │
                         ▼
                    ┌──────────┐
                    │  RETURN  │
                    └──────────┘
```

# FIG. 3

START

S301 — Read in processing candidate information (Region number: i)

S302 — Solid object number j = 0 (Initialization)

Repeat for processing candidate number i times

S303 — Set image processing region

S304 — Pattern matching processing

S305 — Detected by pattern matching? — NO

YES

S306 — Record solid object information

S307 — Output recorded solid object information

RETURN

# FIG. 4

EP 2 288 138 A1

# FIG. 5

(a) A1 P1 60 P2 A2 A3 P3

S61. Identify object detected by radar on image

(b) B1 B2 B3

S62. Select processing candidate in image of predetermined distance

Image processing region

Detection result

(c) D1 Q1 C1 60 Q2 C2 D2

S63. Determine position of processing candidate

(d) D1

S64. Object determination on image according to distance

Image processing region

Detection result

# FIG. 6

# FIG. 7

Y axis

Predicted travel path T

H

L

Object X

X axis

Turning radius R

70

Origin O
(Own vehicle)

# FIG. 8

(a)

(b)

# FIG. 9

```
                    ┌──────────────┐
                    │    START     │
                    └──────┬───────┘
                           │
   S401 ┌───────────────────────────────────────┐
     ~~ │       Read in object information       │
        │     (Detected object number: i)        │
        └───────────────────┬───────────────────┘
                            │
   S402 ┌───────────────────────────────────────┐
     ~~ │    Processing candidate number j = 0   │
        │            (Initialization)            │
        └───────────────────┬───────────────────┘
                            │
        ┌───────────────────────────────────────┐
        │        Repeat for detected             │
        │       object number i times            │
        └───────────────────┬───────────────────┘
                            │
    NO ┌────────────────────────────────────┐  S403
   ◄───┤        Within processing            ├───
        │    candidate selection region?     │
        └───────────────────┬────────────────┘
                          YES│
        ┌───────────────────────────────────────┐
        │       Set image processing region      │  ~~ S404
        └───────────────────┬───────────────────┘
                            │
        ┌───────────────────────────────────────┐
        │        Pattern matching processing     │  ~~ S405
        └───────────────────┬───────────────────┘
                            │                      S406
        ┌────────────────────────────────────┐   NO
        │        Detected by pattern          ├───
        │            matching?                │
        └───────────────────┬────────────────┘   S407
                          YES│
        ┌───────────────────────────────────────┐
        │  Record processing candidate information│
        └───────────────────┬───────────────────┘
                            │
        ┌───────────────────────────────────────┐
        │                                       │
        └───────────────────┬───────────────────┘
                            │
        ┌───────────────────────────────────────┐
        │  Output recorded processing candidate  │  ~~ S408
        │             information                │
        └───────────────────┬───────────────────┘
                    ┌──────────────┐
                    │    RETURN     │
                    └──────────────┘
```

# FIG. 10

START

S501 — Read in processing candidate information (Region number: i)

S502 — Solid object number j = 0 (Initialization)

Repeat for processing candidate number i times

Within object determination region? — S503

NO

YES

Set image processing region — S504

Pattern matching processing — S505

Detected by pattern matching? — S506

NO

YES

S507 — Record solid object information

Output recorded solid object information — S508

RETURN

# FIG. 11

START

Read in solid object information PY2[i], PX2[i], and WD2[i] — S601

Calculate time-to-collision TTC[i] — S602

Calculate degree of risk DRECI[i] — S603

Repeat loop for the number of detected objects
Loop

Select object k for which TTC[i] is minimum out of objects for which the following conditional expression holds:

Degree of risk DRECI[i] ≥ cDRECI# — S604

S605 — TTC[k] ≦ cTTCBRK#

NO → S607 TTC[k] ≦ cTTCALM#  NO

YES

S606 — Execute braking control

YES → S608 Output a warining

RETURN

## INTERNATIONAL SEARCH REPORT

| International application No. |
|---|
| PCT/JP2009/058806 |

| A. CLASSIFICATION OF SUBJECT MATTER |
|---|
| *H04N5/225*(2006.01)i, *B60R21/00*(2006.01)i, *G01S17/93*(2006.01)i, *G06T1/00* (2006.01)i, *G06T7/00*(2006.01)i |

According to International Patent Classification (IPC) or to both national classification and IPC

| B. FIELDS SEARCHED |
|---|
| Minimum documentation searched (classification system followed by classification symbols) |
| H04N5/225, B60R21/00, G01S17/93, G06T1/00, G06T7/00 |

Documentation searched other than minimum documentation to the extent that such documents are included in the fields searched

| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2007-240314 A (Omron Corp.), 20 September, 2007 (20.09.07), Par. Nos. [0053] to [0055]; Fig. 8 (Family: none) | 1,2,6,7 |
| Y | JP 2003-139858 A (Fuji Heavy Industries Ltd.), 14 May, 2003 (14.05.03), Par. No. [0030]; Fig. 5 & US 2003/0088361 A1 & EP 1308752 A2 | 1,2,6,7 |
| A | JP 07-129898 A (Toyota Central Research and Development Laboratories, Inc.), 19 May, 1995 (19.05.95), Full text; all drawings (Family: none) | 1-17 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 July, 2009 (13.07.09) | 28 July, 2009 (28.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

REFERENCES CITED IN THE DESCRIPTION

**Patent documents cited in the description**

- JP 2007240314 A
- JP 2008127526 A